# EUROPÄISCHE PATENTSCHRIFT

(11) **EP 0 710 045 B1**
(45) Veröffentlichungstag und Bekanntmachung des Hinweises auf die Patenterteilung: **23.06.1999**
(21) Anmeldenummer: 95113353.7
(22) Anmeldetag: 25.08.1995
(51) Int. Cl.: H04Q 11/04, H04M 3/30

(54) **Verfahren zum Prüfen von Verbindungen in Fernmeldenetzen**
Method for testing of connections in telecommunication networks
Méthode pour tester des liaisons dans des réseaux de télécommunications

(30) Priorität: 29.09.1994 CH 294894
(43) Veröffentlichungstag der Anmeldung: 01.05.1996
(73) Patentinhaber: Siemens Schweiz AG, 8047 Zürich (CH)
(72) Erfinder: Fehlmann, Werner, CH-4107 Ettingen (CH); Nussbaumer, Iwan, CH-4254 Liesberg-Dorf (CH); Reist, Werner, CH-3145 Niederscherli (CH)

(56) Entgegenhaltungen:
- AU-B- 5 013 790
- DE-A- 3 715 773
- US-A- 4 403 119
- US-A- 4 568 802
- US-A- 4 910 760
- US-A- 5 357 556
- INTERNATIONAL CONFERENCE ON COMMUNICATIONS, ICC-87, SESSION 38, PAPER 6, Bd. 3, 10.Juni 1987 SEATTLE US, Seiten 1-5, S.M.KUZYSZYN ET AL. 'ISDN Protocol and Service Verification and Performance Testing'
- PATENT ABSTRACTS OF JAPAN vol. 016 no. 332 (E-1236) ,20.Juli 1992 & JP-A-04 098958 (HITACHI DENSHI SAABISU KK) 31.März 1992,

## Beschreibung

Die vorliegende Erfindung betrifft ein Verfahren nach dem Oberbegriff des Patentanspruchs 1 sowie eine Anwendung desselben.

Bei Inbetriebsetzungen und Funktionsprüfungen von beispielsweise nach ISDN- (Integrated Services Digital Networks)- Normen realisierten Femmeldenetzen müssen einzelne oder ganze Gruppen von Verbindungen dahingehend getestet werden, ob Vorgaben in der Übertragungsqualität und/oder ob gewünschte Signalisierungsprotokolle erwartungsgemäss eingehalten werden. Dazu sind einzelne Verbindungen zwischen zwei Endgeräten des Femmeldenetzes aufzubauen. Über die aufgebauten Verbindungen können dann Leistungsmerkmale der miteinander verbundenen Endgeräte bzw. der im Femmeldenetz für die jeweilige Verbindungsart verwendeten Funktionen getestet werden. Zu den zu prüfenden Funktionen und Leistungsmerkmalen gehören insbesondere das Senden und Empfangen von Sprachsignalen, das Übertragen von Daten und Bildinformationen sowie die damit verbundene Identifizierung der betroffenen Endgeräte bzw. Endgerätetypen. Die im Femmeldenetz am häufigsten verwendeten Endgerätetypen sind dabei nebst Telefonapparaten, beispielsweise Telekopiergeräte oder mit einem Leitungsanschluss versehene Computer zur Übertragung von Daten.

Aus der US-A-4 910 760 ist eine Anordnung zum Prüfen eines Femmeldenetzes bekannt, in der eine Prüfstation verwendet wird, die über das Netz Prüfverbindungen zu Antwortstationen aufbaut. Dabei wird von der Teststation eine Verbindung zur Antwortstation aufgebaut, die darauf einen für sie charakteristischen Identifikationscode an die Teststation sendet, der in der Teststation mit einem erwarteten Identifikationscode verglichen wird. Als Antwortstationen werden spezielle Transponder verwendet.

Femer ist aus PATENT ABSTRACTS OF JAPAN, vol. 016 no. 332 (E-1236), 20. Juli 1992 & JP-A-4098958 ein Verfahren zum Prüfen der Übertragungsqualität von Sprachinformationen in einen Femmeldenetz bekannt. Dabei sendet eine automatische Antwortstation bei ihr gespeicherte Sprachinformationen zu einer anrufenden Station, nachdem sie diese identifiziert hat. In der anrufenden Station überprüft ein Operator die Qualität der empfangenen Informationen.

Der vorliegenden Erfindung liegt die Aufgabe zugrunde, ein Verfahren zum Überprüfen von Vermittlungs- und Übertragungsvorgängen in einem Vermittlungsnetz anzugeben, das ohne dauemde Überwachung durchgeführt und das kostengünstig realisiert werden kann.

Diese Aufgabe wird durch die im kennzeichnenden Teil des Patentanspruchs 1 angegebenen Massnahmen gelöst. Vorteilhafte Ausgestaltungen der Erfindung sowie eine Anwendung des Verfahrens sind in weiteren Ansprüchen angegeben.

Die Erfindung weist folgende Vorteile auf: Indem Testsequenzen von der Testeinheit aus initialisiert und hauptsächlich gesteuert werden, können Überprüfungen von Verbindungen im Vermittlungsnetz mit Hilfe von einfachen Antworteinheiten, die im Handel erhältlich sind, durchgeführt werden. Dadurch können die Kosten für die gesamte Testanordnung wesentlich reduziert werden.

Durch das Aufnehmen und durch das spätere Abspielen von Meldungen in den Antworteinheiten wird die Übertragungsqualität der Verbindungen in beide Richtungen geprüft. Darüber hinaus wird das Routing (Verbindungsführung im Vermittlungsnetz) mit Hilfe eines für eine Antworteinheit individuell einstellbaren Identifikationscodes kontrolliert, d.h. ein falsches Ansteuem einer Antworteinheit wird durch die Testeinheit erkannt.

Femer wird durch die automatische Verarbeitung von Testsequenzen bei gleichzeitigem Aufzeichnen der Testergebnisse eine hohe Reproduzierbarkeit erreicht. Fehler können somit leicht lokalisiert werden. Bei aufgebauter Verbindung zwischen einer Antworteinheit und einer Testeinheit werden Tests durchgeführt, die Aufschluss über die Qualität der Verbindung geben. Nach Abschluss der Tests können die Ergebnisse in der Testeinheit ausgewertet, nach Bedarf angezeigt oder anderweitig verwendet werden. Die Ergebnisse können beispielsweise auch an eine übergeordnete Testeinheit zur Speicherung in einer Datenbank übermittelt werden.

Schliesslich ergibt sich durch den kompakten und modularen Aufbau der Testeinheit eine einfache Bedienung, eine kostengünstige Wartung und die Möglichkeit, Erweiterungen und Verbesserungen mit geringem Aufwand in die bestehende Lösung zu integrieren. Darüber hinaus lassen sich mehrere erfindungsgemässe Testeinheiten und mehrere Antworteinheiten an dasselbe Vermittlungsnetz anschliessen, wobei sich mit mindestens einer dieser Testeinheiten sowohl andere Testeinheiten als auch alle oder einzelne Antworteinheiten konfigurieren und/oder steuern lassen. Somit lässt sich die gesamte Prüfanordnung von einer Testeinheit aus überwachen.

Die bereits erwähnte modulare Aufbauweise trägt zudem zu einer weiteren Kostenreduktion der gesamten Prüfanordnung bei, denn die dezentralen Testeinheiten müssen nicht mit allen Komponenten ausgerüstet werden. Beispielsweise können Ein- und Ausgabegeräte und die damit verbundenen Computerprogramme bei solchen Testeinheiten weggelassen werden.

Die Erfindung wird nachfolgend anhand von Zeichnungen beispielsweise näher erläutert. Dabei zeigt
- Fig. 1: verschiedene an ein Vermittlungsnetz angeschlossene Testeinheiten und Antworteinheiten,
- Fig. 2: einen hardwaremässigen Aufbau einer erfindungsgemässen Testeinheit und
- Fig. 3: einen softwaremässigen Aufbau der Testeinheit.

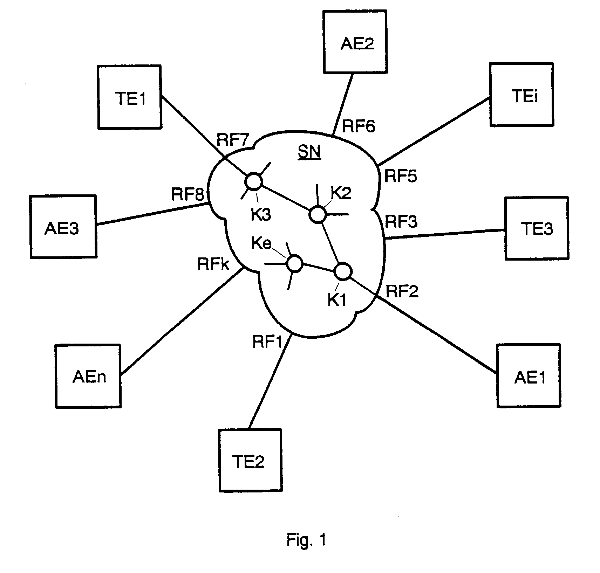

Fig. 1 zeigt ein Fernmeldenetz bestehend aus einem Vermittlungsnetz SN und verschiedenen über Referenzpunkte RF1 bis RFk an das Vermittlungsnetz SN angeschlossenen Antworteinheiten AE1 bis AEn und Testeinheiten TE1 bis TEi. Beim Vermittlungsnetz SN handelt es sich beispielsweise um ein nach ISDN- Normen aufgebautes Netz, an das an den Referenzpunkten RF1 bis RFk vorgesehenen Basisanschlüssen Endgeräte angeschlossen werden können, wie beispielsweise Telephonapparate, Terminaladapter, Telekopierer der Gruppe 3 oder 4, usw.

Anstelle der zur Verbindung von Testeinheiten TE1 bis TEi mit dem Vermittlungsnetz SN vorgeschlagenen Basisanschlüsse können jedoch auch Primärratenanschlüsse (CCITT-Empfehlung I-431, Blue Book, Vol. 111.8, Genf: ITU 1988) oder ähnliche in anderen Kommunikationsnetzen üblicherweise eingesetzte normierte Schnittstellen verwendet werden.

Die Verwendung von mehreren an das gleiche Vermittlungsnetz SN angeschlossenen Testeinheiten TE1 bis TEi hat bei der Ansteuerung von verschiedenen Antworteinheiten AE1 bis AEn neben einer grösseren Kapazität auch zur Folge, dass die Zuverlässigkeit einer solchen Prüfanordnung gegenüber einer Prüfungsanordnung mit einer einzigen oder nur wenigen Testeinheiten AE1 bis AEn erhöht ist, denn bei einem Ausfall einer Testeinheit AE1 bis AEn können deren Prüfungssequenzen von einer anderen Testeinheit AE1 bis AEn übernommen werden.

In Fig. 1 ist auch die Struktur des Vermittlungsnetzes SN angedeutet, indem verschiedene Netzknoten K1 bis Ke und deren Verbindungen dargestellt sind. Dabei können die Netzknoten K1 bis Ke mit Fernmeldezentralen gleichgesetzt werden, die über Leitungsbündel miteinander verbunden sind. Die Endgeräte bzw. die Testeinheiten TE1 bis TEi und die Antworteinheiten AE1 bis AEn sind häufig über sogenannte Konzentratorschaltungen in bekannter Weise an die Netzknoten K1 bis Ke anschliessbar. Die Konzentratorschaltungen befinden sich in den Netzknoten K1 bis Ke und werden zur besseren Ausnützung des Vermittlungsnetzes SN eingesetzt, indem meist eine grössere Anzahl von Leitungen von bzw. zu den am Vermittlungsnetz SN angeschlossenen Endgeräten auf eine kleinere Anzahl, die beispielsweise der Anzahl Leitungen in einem Bündel zwischen den Netzknoten K1 bis Ke entsprechen, zusammengefasst werden. Dadurch entsteht wie erwähnt eine erhöhte Auslastung des Vermittlungsnetzes SN jedoch auch eine Einschränkung für die Benützer, denn durch den Einsatz von Konzentratoren können nicht alle Endgeräte eines Netzknoten K1 bis Ke gleichzeitig Verbindungen zu anderen Netzknoten K1 bis Ke des Vermittlungsnetzes SN aufnehmen. Daraus ergibt sich auch eine hohe durchschnittliche Verkehrsdichte auf den Leitungsbündeln zwischen den Netzknoten K1 bis Ke und damit auch die Notwendigkeit, die Übertragung und die Qualität bei der Übertragung dauernd gewährleisten zu können. Dazu ist es ausreichend, wenn in einem Leitungsbündel zumindest eine Verbindung zwischen den Netzknoten K1 bis Ke aufgebaut wird und dabei einige Qualitätstests durchgeführt werden. Zu diesen Qualitätstests gehört beispielsweise das Aufbauen einer Verbindung an einen vorgegebenen Zielpunkt sowie das Übertragen von Daten in beide Übertragungsrichtungen unter Einhaltung von vorgegebenen Qualitätsanforderungen.

Ein wesentliches Merkmal der Erfindung besteht darin, dass die Prüfungssequenzen zur Durchführung oben erwähnter Qualitätstests hauptsächlich in den bzw. durch die Testeinheiten TE1 bis TEi automatisch durchgeführt bzw. ausgelöst werden, währenddem die Antworteinheiten AE1 bis AEn aus im Handel erhältlichen automatischen Anrufbeantwortern - wie beispielsweise das von SIEMENS entwickelte und von der CH Telecom PTT vertriebene Gerät PRONTO III - besteht. Durch die Verwendung von handelsüblichen Geräten für die Antworteinheiten AE1 bis AEn können die Kosten für die Prüfanordnung stark reduziert werden, ohne dass Einbussen in der Art der Prüfungssequenzen hingenommen werden müssen.

Ein handelsüblicher automatischer Anrufbeantworter ist im wesentlichen ein Telefonapparat, der sich durch zusätzliche Leistungsmerkmale wie das automatische Abspielen eines Ansagetextes und das Aufzeichnen von Meldungen auszeichnet. Als Ansagetext wird dabei der im Anrufbeantworter aufgezeichnete Text verstanden, der als erstes nach dem Zustandekommen der Verbindung abgespielt und dem rufenden Teilnehmer übermittelt wird. Auf der anderen Seite wird unter einer Meldung ein vom rufenden Teilnehmer nach dem Abspielen des Ansagetextes aufzuzeichnender Text verstanden, wobei - falls erforderlich - mehrere Meldungen aufgezeichnet werden können, ohne dass vorhergehende gelöscht werden müssen. Neben diesen Basisleistungsmerkmalen sind auch Anrufbeantworter mit Fernabfragemöglichkeiten erhältlich. Diese bestehen beispielsweise dann, dass vom rufenden Teilnehmer aus der Ansagetext geändert werden kann, dass aufgezeichnete Meldungen abgespielt werden können und dass ein durch ein Passwort geschützter spezieller Speicher im Anrufbeantworter vorgesehen ist, in dem eine Meldung aufgezeichnet werden kann. Zur Steuerung dieser Leistungsmerkmale wird vorzugsweise das nunmehr weit verbreitete Tontastenwahlverfahren oder DTMF (Dual Tone Multi- Frequency Dialling) verwendet. Dieses bekannte Verfahren wird in der Fernmeldetechnik hauptsächlich zur Übermittlung der Adresse des gewünschten Teilnehmers - d.h. der Teilnehmernummer - an das Vermittlungsnetz verwendet. Dabei werden die zehn Ziffern und weitere Zeichen mit Hilfe von zwei aus sieben vorbestimmten Frequenzen codiert. Nachdem eine Verbindung aufgebaut ist, werden diese Signale direkt dem beteiligten Teilnehmer übermittelt. Dies wird bei der Fernsteuerung von automatischen Anrufbeantwortem benützt, indem sowohl das Auslösen der einzelnen Steuerfunktionen als auch die benötigten Passwörter mit den erwähnten Frequenzen codiert werden.
Damit Frequenzen des normierten Tonfrequenzwahlverfahrens nicht im Anrufbeantworter aufgezeichnet werden, sind in herkömmlichen Anrufbeantwortern zur Unterdrückung oftmals Bandpassfilter eingebaut.

Ein als Antworteinheit AE1 verwendeter Anrufbeantworter, der im erfindungsgemässen Verfahren eingesetzt wird, sollte folgende Leistungsmerkmale aufweisen: Aufzeichen von Meldungen und fernsteuerbares Aufzeichnen eines Ansagetextes. Damit der Anrufbeantworter auch bei der Realisierung der weiteren beanspruchten Ausführungsformen verwendet werden kann, sollten als zusätzliche Merkmale auch ein passwortgeschütztes Aufzeichnen von Meldungen, ein Abspielen von aufgezeichneten Meldungen mit und ohne Passwortschutz und/oder ein ferngesteuertes Löschen der Meldungen möglich sein.

Im folgenden wird ausgehend von der in Fig. 1 dargestellten Prüfanordnung das erfindungsgemässe Verfahren erläutert, wobei zunächst davon ausgegangen wird, dass lediglich eine am Referenzpunkt RF7 angeschlossene Testeinheit TE1 und eine am Referenzpunkt RF2 angeschlossene Antworteinheit AE1 vorhanden ist. Entsprechendes gilt jedoch auch für die weiteren Testeinheiten TE2 bis TEi und die Antworteinheiten AE1 bis AEn.

Bevor Prüfungssequenzen durchgeführt werden können, muss die Antworteinheit AE1 initialisiert werden. Dies erfolgt vorzugsweise durch die Testeinheit TE1, die dazu eine Verbindung zur Antworteinheit AE1 aufbaut. Die Initialisierung besteht dabei darin, dass ein eindeutiger Identifikationscode als Ansagetext in der Antworteinheit AE1 aufgezeichnet wird. Für diese Aufzeichnung werden Frequenzen eines modifizierten Tonfrequenzwahlverfahrens verwendet. Das modifizierte und das erwähnte normierte Tonfrequenzwahlverfahren unterscheiden sich dabei voneinander durch die Wahl der verwendeten Frequenzen. So liegen die Frequenzen des modifizierten Verfahrens vorzugsweise zwischen denjenigen des normierten Verfahrens, weshalb die erwähnte Unterdrückung von Signalanteilen durch Bandpassfilter im Anrufbeantworter bzw. in der Antworteinheit AE1 nicht mehr erfolgen kann.

Ist die Antworteinheit AE1 initialisiert, indem ein Identifikationscode mit Hilfe des modifizierten Tonfrequenzwahlverfahrens als Ansagetext aufgezeichnet wurde, so kann das Prüfverfahren durchgeführt werden. Dies erfolgt in einem ersten Verfahrensschritt durch das Aufbauen einer Verbindung von der Testeinheit TE1 über das Vermittlungsnetz SN zur Antworteinheit AE1. Bei einem störungsfreien Betrieb der Antworteinheit AE1 wird in einem zweiten Verfahrensschritt der Ansagetext mit dem frequenzcodierten Identifikationscode abgespielt und an die Testeinheit TE1 übermittelt, welche ihrerseits in einem dritten Verfahrensschritt den empfangenen Identifikationscode decodiert und mit dem für die betreffende Antworteinheit AE1 erwarteten Identifikationscode vergleicht. Wird im dritten Verfahrensschritt von der Testeinheit TE1 Übereinstimmung der beiden Identifikationscode festgestellt, so wurde mit der richtigen Antworteinheit AE1 eine Verbindung aufgebaut, was bedeutet, dass das Routing (d.h. die Wegfindung über die Netzknoten K1, K2 und K3) im Vermittlungsnetz SN korrekt abgelaufen ist.

In einem vierten Verfahrensschritt sendet die Testeinheit TE1 ein Passwort an die Antworteinheit AE1, damit diese eine Meldung im passwortgeschützten Speicher aufzeichnen kann. Nachdem sich die Antworteinheit AE1 im Meldungsaufzeichnungsmodus befindet und dies der Testeinheit TE1 auch angezeigt wird, übermittelt diese eine Meldung an die Antworteinheit AE1. Da im passwortgeschützten Speicher der Antworteinheit AE1 lediglich eine Meldung gespeichert werden kann, müssen keine weiteren Steuerungsmassnahmen getroffen werden.
Nach erfolgter Aufzeichnung wird die Verbindung zwischen der Testeinheit TE1 und der Antworteinheit AE1 abgebaut.

In einem fünften Verfahrensschritt wird die selbe Verbindung zwischen der Testeinheit TE1 und der Antworteinheit AE1 nach einer hauptsächlich durch die Antworteinheit AE1 bedingten Wartezeit wieder aufgebaut. Auch nach diesem Verbindungsaufbau kann, wie schon im zweiten und dritten Verfahrensschritt, der Identifikationscode der Antworteinheit AE1 in der Testeinheit TE1 überprüft werden. Da das Routing jedoch bereits überprüft wurde, ist in einer bevorzugten Ausführungsform der Erfindung diese zweite Prüfmöglichkeit nicht vorgesehen, damit das Prüfverfahren möglichst schnell abgeschlossen werden kann. Aus diesem Grund wird nach dem Zustandekommen der Verbindung zwischen der Testeinheit TE1 und der Antworteinheit AE1 das Passwort zum Abspielen der während der ersten Verbindung aufgezeichneten Meldung von der Testeinheit TE1 an die Antworteinheit AE1 übermittelt. Analog zur Überprüfung von Identifikationscodes wird nun die an die Testeinheit TE1 übertragene Meldung mit der ursprünglich im vierten Verfahrensschritt aufgezeichneten Meldung verglichen. Beim Vergleich der beiden Meldungen kann die Übertragungsqualität der Verbindung festgestellt werden.

In einem letzten Verfahrensschritt wird die zweite Verbindung nach übermittelter Meldung an die Testeinheit TE1 abgebaut, wobei der oben erwähnte Vergleich und die weitere Auswertung der Prüfsequenzen in der Testeinheit TE1 nicht abgeschlossen sein müssen.

Das erfindungsgemässe Verfahren kann aber bereits im vierten Verfahrensschritt vor dem Übertragen einer Meldung an die Antworteinheit AE1 abgebaut werden, nämlich sobald sich die Antworteinheit AE1 im Meldungsaufzeichnungsmodus befindet und dies der Testeinheit TE1 angezeigt wurde. Dies ist insbesondere dann vorteilhaft, wenn von einer einzigen Testeinheit TE1 viele Antworteinheiten AE1 bis AEn in kurzer Zeit überprüft werden sollen. Auch in diesem abgekürzten Verfahren wird sowohl die Vorwärts- als auch die Rückwärtsübertragung - wenn auch nicht mit der durch die weiteren Verfahrensschritte erreichten Genauigkeit - überprüft, denn mit dem Erkennen des richtigen Identifikationscodes wird die Rückübertragung, d.h. die Übertragung von der Antworteinheit AE1 zur Testeinheit TE1, und mit dem Übertragen des Passwortes zur Versetzung der Antworteinheit AE1 in den Aufzeichnungsmodus wird die Vorwärtsübertragung, d.h. die Übertragung von der Testeinheit TE1 zur Antworteinheit AE1, geprüft.

Eine weitere Ausführungsform des erfindungsgemässen Verfahrens besteht darin, dass die im vierten Verfahrensschritt von der Testeinheit TE1 an die Antworteinheit AE1 übertragene Meldung nicht im passwortgeschützten Speicher der Antworteinheit AE1 sondern im normalen Meldungsaufzeichnungsbereich aufgezeichnet wird, was bei einem automatischen Anrufbeantworter der oben beschriebenen Art einer Aufzeichnung auf Band oder einer ähnlichen sequentiellen Aufzeichnung entspricht. Zur Vereinfachung des Verfahrens wird die in diesem vierten Verfahrensschritt übertragene Meldung als erste Meldung auf Band aufgezeichnet. Damit kann die im fünften Verfahrensschritt allfällig vorgenommene Wiedergabe und Rückübertragung der Meldung auf eine Wiedergabe - ohne weiteres Nachprüfen - beschränkt werden. Voraussetzung ist allerdings, dass vor dem Aufzeichnen der Meldung im vierten Verfahrensschritt das Band vollständig zurückgespult wird.
Nach der Meldungsaufzeichung wird die Verbindung zwischen Testeinheit TE1 und Antworteinheit AE1 wiederum abgebaut, wobei allenfalls auch hier weitere Verfahrensschritte analog zu oben erwähntem fünften Verfahrensschritt folgen können.

Neben den beschriebenen Verfahrensschritten zum Prüfen des Routing und der Qualität der Übertragung ist beispielsweise auch ein Überprüfen der Taxierung im Vermittlungsnetz SN möglich. Dazu ist in der Testeinheit TE1 eine Datenbank mit Wertetabellen vorgesehen, in der Angaben über Taxierungsintervalle und über Distanzeinheiten für Verbindungen enthalten sind, wie sie etwa auch im Vermittlungsnetz SN als Grundlage zur Verrechnung von Verbindungen verwendet werden, denn die Taxierung wird einerseits aufgrund der Verbindungsdauer anderseits aufgrund der Verbindungsdistanz vorgenommen.
Bei der Prüfung der Taxierung wird entweder eine der Verbindungen des zweiten oder fünften Verfahrensschrittes oder eine neue Verbindung für eine gewisse Zeit belassen. Nach dem Abbau der Verbindung werden die vom Vermittlungsnetz SN dem Teilnehmer verrechneten mit den in der Testeinheit TE1 berechneten Gebühren verglichen. Bei Übereinstimmung der beiden Beträge kann auf eine intakte Taxierung geschlossen werden.

In einer weiteren Ausführungsform des erfindungsgemässen Verfahrens werden die einzelnen Verfahrensschritte und deren Ergebnisse in der Testeinheit TE1 aufgezeichnet und protokolliert. Dadurch ist ein spätere Analyse auch zusammen mit bei anderen Antworteinheiten AE1 bis AEn durchgeführten Testsequenzen möglich. Ferner können die in Testeinheiten TE1 bis TEi-1 erzeugten Ergebnisse an eine zentrale Testeinheit TEi übertragen und dort weiteren Analysen unterzogen werden.

Darüber hinaus ist zu erwähnen, dass das erfindungsgemässe Verfahren auch dann verwendet werden kann, wenn anstelle des modifizierten Tonfrequenzwahlverfahrens beispielsweise nur eine oder aber auch mehrere Frequenzkomponenten gleichzeitig übertragen werden.

Schliesslich kann das erfindungsgemässe Verfahren auch zur Überprüfung von Verbindungen, die zur Übertragung von Fernkopien eingesetzt werden, verwendet werden. Dazu werden die in den Antworteinheiten AE1 bis AEn aufgezeichneten und später wiedergegebenen Meldungen bezüglich ihres Frequenzspektrums ähnlich einer zu übertragenden Fernkopie aufgebaut. Somit kann mit Hilfe von einfachen Antworteinheiten AE1 bis AEn auch die Qualität der Übertragung von Fernkopien überprüft werden.

Eine besondere Anwendung des erfindungsgemässen Verfahrens besteht darin, dass von einzelnen oder auch mehreren Testeinheiten TE1 bis TEi aus automatisch ganze Listen von zu prüfenden Verbindungen zu Antworteinheiten AE1 bis AEn bearbeitet werden, indem zu jeder der in der Liste bezeichneten Antworteinheiten AE1 bis AEn eine Verbindung aufgebaut und einzelne oder mehrere der erwähnten Testsequenzen durchgeführt werden. Somit können gleichzeitig Abschnitte des Vermittlungsnetzes SN - allenfalls periodisch und zu einer vorgegebenen Zeit (beispielsweise nachts) - getestet werden. Das erwähnte Zusammenführen der Daten auf einer zentralen Testeinheit TEi und die folgende Analyse können dabei ebenfalls automatisiert werden.

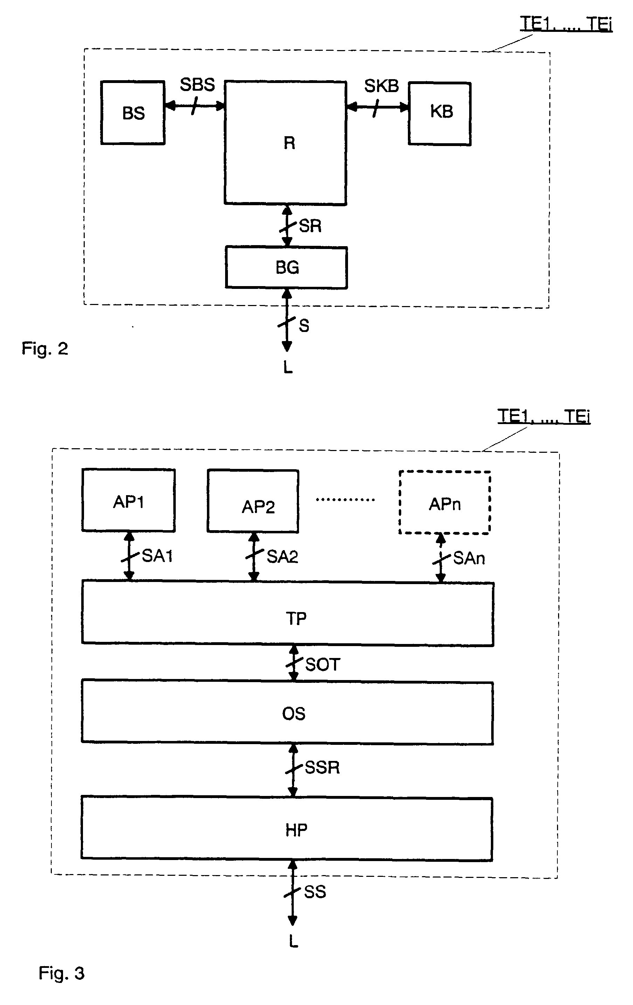

Fig. 2 zeigt einen hardwaremässigen Aufbau der erfindungsgemässen Testeinheiten TE1 bis TEi in der voll ausgebauten Ausführung für den Betrieb als Prüfstation in einem beispielsweise nach ISDN- (Integrated Services Digital Networks)- Normen aufgebauten Vermittlungsnetz SN (Fig. 1). Die Testeinheiten TE1 bis TEi sind von aussen über eine Schnittstelle S an die Leitung L des Vermittlungsnetzes SN (Fig. 1) anschliessbar, wobei die Schnittstelle S im vorliegenden Ausführungsbeispiel durch die CCITT- (Comité Consultatif International Télégraphique et Téléphonique)-Empfehlung Q.931 (CCITT: Recommendation Q.931: Blue Book, Vol. VI.11, Genf: ITU 1988) als Basisanschluss realisiert ist. Die Testeinheiten TE1 bis TEi selbst bestehen je aus einer Schnittstellenbaugruppe BG, einem Rechner R und zwei optionalen Ein- bzw. Ausgabeeinheiten KB bzw. BS. Dabei nimmt die Schnittstellenbaugruppe BG eine eigentliche Schnittstellenanpassung zwischen der ISDN- typischen Schnittstelle S und einer internen Schnittstelle SR des Rechners R vor. Über zwei weitere Schnittstellen SBS und SKB wird der Rechner R ferner mit der Eingabeund der Ausgabeeinheit KB und BS verbunden. Wird für die Schnittstelle SR eine verbreitete Norm - wie beispielsweise EISA, AT-Bus oder Future-Bus - verwendet und werden die Schnittstellen SBS und SKB entsprechend den bei handelsüblichen Ein- und Ausgabegeräten verwendeten Schnittstellen gewählt, so können einzelne Komponenten der Testeinheiten TE1 bis TEi ausgetauscht werden, ohne dass Anpassungen notwendig sind. Dies gilt insbesondere auch für die Schnittstellenbaugruppe BG, die etwa unter der Bezeichnung "ISDN-Karten für Basisanschlüsse" von verschiedenen Herstellern im Handel erhältlich sind.

Sind in spezielle Anwendungen - wie beispielsweise bei der erwähnten Listenverarbeitung - keine Ein- und Ausgabeeinheiten KB und BS notwendig, so besteht der hardwaremässige Aufbau der betreffenden Testeinheiten lediglich aus dem Rechner R und der Schnittstellenbaugruppe BG.

In Fig. 3 ist ein Softwarekonzept zu der anhand Fig. 2 erläuterten Hardware dargestellt, wobei sich dieses Softwarekonzept auch für einen Hardwareaufbau eignet, der sich von dem anhand Fig. 2 beschriebenen unterscheidet.

Zu den hardwaremässig vorgegebenen Schnittstellen S und SR (Fig. 2) sind entsprechende softwaremässige Schnittstellen SS und SSR vorgesehen, die von einem in der Schnittstellenbaugruppe BG (Fig. 2) ablaufenden und diese steuernden Hilfsprogramm HP kontrolliert werden. Das Hilfsprogramm HP steuert somit vor allem die in der speziellen Hardware, nämlich der Schnittstellenbaugruppe BG (Fig. 2), vorhandenen Funktionen sowie die für die Normen der Schnittstelle SS und SSR verwendeten Protokolle. Ein über die Schnittstelle SSR mit dem Hilfsprogramm HP kommunizierendes Systemprogramm OS übernimmt im Rechner R eine analoge Funktion wie das Hilfsprogramm HP in der Schnittstellenbaugruppe BG: Das Systemprogramm OS steuert die hardwarenahen Komponenten des Rechners R und bedient eine weitere normierte Schnittstelle zu einem auf einem erhöhten Abstraktionsniveau liegenden Treiberprogramm TP. Dieses Treiberprogramm TP enthält sämtliche zur Kommunikation mit dem Vermittlungsnetz SN (Fig. 1) bzw. mit anderen Endgeräten des Fernmeldenetzes benötigten Funktionen bzw. Meldungen, wie beispielsweise Aufforderung zur Datenübertragung, Signalisierungen, Anzeigen von Fehlern, usw., ohne dass alle damit verbundenen Einzelheiten dem Benützer des Treiberprogrammes TP bekannt sein müssen.
Die Gesamtheit dieser Funktionen und Meldungen bildet die Grundlage für Schnittstellen SA1 bis SAn zu Applikationsprogrammen AP1 bis APn, die ein weiteres und letztes Abstraktionsniveau darstellen. Die Applikationsprogramme AP1 bis APn beinhalten neben den eigentlichen Testsequenzen beispielsweise auch das Protokollierung von Testabläufen, statistische Auswertungen, Hilfsprogramme zur Einstellung der Parameter der Testeinheiten TE1 bis TEi (Fig. 1), Fernbedienung von mit dem gleichen Vermittlungsnetz SN (Fig. 1) verbundenen Testeinheiten TE1 bis TEi, usw.

Weitere Beispiele für Applikationsprogramme AP1 bis APn sind die verschiedenen Ausführungsvarianten der Testsequenzen, das Erzeugen und Erkennen von Frequenzen des modifizierten Frequenzwahlverfahrens und das Verfahren zur Überprüfung der Taxierung.

Die vorzugsweise ebenfalls über Basisanschlüsse an das Vermittlungsnetz SN (Fig. 1) angeschlossenen Testeinheiten TE1 bis TEi können wie bereits angedeutet unterschiedlich ausgestattet sein. So ist denkbar, dass die Testeinheiten TE2 bis TEi nur mit den minimal erforderlichen Hardwarekomponenten Rechner R und Schnittstellenbaugruppe BG (Fig. 2) sowie mit den notwendigen Applikationsprogrammen AP1 bis APe (Fig. 3) ausgerüstet sind und dass nur die Testeinheit TE1 mit Eingabe- und Ausgabeeinheiten KB und BS (Fig. 2) und zusätzlichen Applikationsprogrammen APe+1 bis APn versehen sind. Die Konfiguration und Steuerung der Testeinheiten TE2 bis TEi wird in diesem Falle von der zentralen Testeinheit TE1 vorgenommen, die mit Hilfe einer Fernsteuerung die Testeinheiten TE2 bis TEi zu steuern und kontrollieren vermag.

Die Testeinheiten TE1 bis TEi (Fig. 1) können somit an beliebigen Orten installiert werden, da sie über das Vermittlungsnetz SN (Fig. 1) selbst gesteuert werden können. Damit ergibt sich einen weiteren, bereits angedeuteten Vorteil der modularen Aufbauweise der Testeinheiten TE1 bis TEi, denn Kosten und Wartungsaufwand können durch die je nach Anforderung benötigten Hardwarekomponenten (Fig. 2) und Applikationsprogrammen AP1 bis APn (Fig. 3) gezielt minimiert werden.

Das Verfahren besteht darin, dass zwischen mindestens einer an das Vermittlungsnetz SN angeschlossenen Testeinheit TE1 bis TEi und einer ebenfalls an das Vermittlungsnetz SN angeschlossenen Antworteinheit AE1 bis AEn in einem ersten Verfahrensschritt eine Verbindung aufgebaut wird, wobei die Antworteinheit AE1 bis AEn einem handelsüblichen automatischen Anrufbeantworter entspricht. In einem zweiten Verfahrensschritt wird von der Antworteinheit AE1 bis AEn an die Testeinheit TE1 bis TEi ein für die Antworteinheit AE1 bis AEn charakteristischer Identifikationscode übermittelt, der in einem dritten Verfahrensschritt in der Testeinheit TE1 bis TEi mit einem erwarteten Identifikationscode verglichen wird, wobei bei Übereinstimmung auf ein einwandfreies Routing im Vermittlungsnetz SN geschlossen werden kann. Anschliessend wird die Verbindung wieder abgebaut.
In weiteren Ausführungsvarianten der Erfindung erfolgen zusätzliche Verfahrensschritte, die es ermöglichen, auch die Übertragungsqualität einer Verbindung zu überprüfen. Dazu werden beispielsweise Sprachsignale mit beliebigen Frequenzspektren nachgebildet, die in beide Richtungen zwischen der Testeinheit TE1 bis TEi und der Antworteinheit AE1 bis AEn übermittelt werden. Ferner können mehrere Testeinheiten TE1 bis TEi in einem nach ISDN- (Integrated Services Digital Networks)- Norm realisierten Fernmeldenetz zur automatischen Prüfung von Verbindungen im Vermittlungsnetz SN verwendet werden, wobei nicht alle Testeinheiten TE1 bis TEi mit allen Leistungsmerkmalen versehen sein müssen. Insbesondere müssen nicht alle Testeinheiten TE1 bis TEi vor Ort konfigurierbar sein, da eine Konfiguration mit Hilfe einer Fernsteuerung über das Fernmeldenetz von einer voll ausgebauten Testeinheit TE1 bis TEi aus vorgenommen werden kann.

## Patentansprüche

1. Verfahren zum Überprüfen von Vermittlungs- und Übertragungsvorgängen in einem Vermittlungsnetz (SN), an das mindestens zwei Endgeräte (TE1,..., TEi; AE1,..., AEn) angeschlossen sind, wovon mindestens eines der Endgeräte (TE1,..., TEi; AE1,..., AEn) eine die wesentlichen Verfahrensschritte steuemde Testeinheit (TE1,..., TEi) und mindestens ein weiteres Endgerät (TE1,..., TEi; AE1,..., AEn) eine Antworteinheit (AE1,..., AEn) ist, wobei das Verfahren darin besteht, dass in einem ersten Verfahrensschritt eine Verbindung von einer Testeinheit (TE1, ..., TEi) zu einer Antworteinheit (AE1, ..., AEn) aufgebaut wird, dass in einem zweiten Verfahrensschritt ein für die Antworteinheit (AE1,..., AEn) charakteristischer Identifikationscode von der Antworteinheit (AE1, ..., AEn) an die Testeinheit (TE1, ..., TEi) übermittelt wird und dass in einem dritten Verfahrensschritt der übermittelte mit einem von der Testeinheit (TE1, ..., TEi) erwarteten Identifikationscode verglichen wird, **dadurch gekennzeichnet**, dass die Antworteinheiten (AE1, ..., AEn) automatische Anrufbeantworter zum Aufzeichnen und zum Abspielen von über Sprachkanäle übertragenen Daten mit oder ohne Passwortschutz sind, und dass der charakteristische Identifikationscode in der Antworteinheit (AE1, ..., AEn) als Ansagetext aufgezeichnet ist, der im zweiten Verfahrensschritt abgespielt wird.

2. Verfahren nach Anspruch 1, **dadurch gekennzeichnet**, dass in einem vierten Verfahrensschritt von der Testeinheit (TE1,..., TEi) an die Antworteinheit (AE1,..., AEn) ein Passwort gesendet wird, durch das die Antworteinheit (AE1,..., AEn) in einen der Testeinheit (TE1, ..., TEi) angezeigten Meldungsaufzeichnungsmodus versetzt wird, worauf die Verbindung abgebaut wird.

3. Verfahren nach Anspruch 1, **dadurch gekennzeichnet**, dass in einem vierten Verfahrensschritt von der Testeinheit (TE1,..., TEi) an die Antworteinheit (AE1,..., AEn) ein Passwort gesendet wird, durch das die Antworteinheit (AE1, ..., AEn) in einen der Testeinheit (TE1, ..., TEi) angezeigten Meldungsaufzeichnungsmodus versetzt wird, worauf diese an die Antworteinheit (AE1,..., AEn) eine Meldung sendet, die in der Antworteinheit (AE1, ..., AEn) aufgezeichnet wird.

4. Verfahren nach Anspruch 1, **dadurch gekennzeichnet,** dass in einem vierten Verfahrensschritt die Testeinheit (TE1, ..., TEi) an die Antworteinheit (AE1, ..., AEn) eine Meldung sendet, die in der Antworteinheit (AE1, ..., AEn) als erste Meldung aufgezeichnet wird.

5. Verfahren nach Anspruch 1, 3 oder 4, **dadurch gekennzeichnet,** dass in einem letzten Verfahrensschritt die Verbindung zwischen Testeinheit (TE1,..., TEi) und Antworteinheit (AE1, ..., AEn) abgebaut wird.

6. Verfahren nach Anspruch 5 in Verbindung mit einem der Ansprüche 3 oder 4, **dadurch gekennzeichnet,** dass nach dem Abbauen der Verbindung zwischen der Testeinheit (TE1, ..., TEi) und der Antworteinheit (AE1,..., AEn) und nach Ablauf einer Wartezeit die selbe Verbindung wieder aufgebaut wird, wobei die Überprüfung des Identifikationscodes entsprechend dem zweiten und dem dritten Verfahrensschritt nochmals durchgeführt oder weggelassen wird, und dass anschliessend die in der Antworteinheit (AE1, ..., AEn) gespeicherte Meldung abgespielt und an die Testeinheit (TE1, ..., TEi) übermittelt wird, in der die empfangene mit der ursprünglich gesendeten Meldung verglichen wird, und die Verbindung nach abgeschlossener Übertragung der Meldung abgebaut wird.

7. Verfahren nach einem oder mehreren der vorangehenden Ansprüche, **dadurch gekennzeichnet**, dass eine aufgebaute Verbindung zwischen der Testeinheit (TE1,..., TEi) und der Antworteinheit (AE1,..., AEn) für eine bestimmte Zeit belassen wird, während der die Testeinheit (TE1, ..., TEi) die vom Vermittlungsnetz (SN) für die Verbindung verrechneten Taxen aufzeichnet, dass in der Testeinheit (TE1,..., TEi) die Taxen zudem aufgrund von in der Testeinheit (TE1, ..., TEi) gespeicherten Wertetabellen berechnet und dass die vom Vermittlungsnetz (SN) zu verrechneten und die von der Testeinheit (TE1, ..., TEi) berechneten Taxen miteinander verglichen werden.

8. Verfahren nach einem oder mehreren der vorangehenden Ansprüche, **dadurch gekennzeichnet**, dass die einzelnen Verfahrensschritte und deren Ergebnisse in der Testeinheit (TE1, ..., TEi) aufgezeichnet und/oder analysiert werden.

9. Verfahren nach einem oder mehreren der vorangehenden Ansprüche, **dadurch gekennzeichnet,** dass mindestens eine Antworteinheit (AE1,..., AEn) durch die Testeinheit (TE1,..., TEi) initialisiert wird.

10. Verfahren nach einem oder mehreren der vorangehenden Ansprüche, **dadurch gekennzeichnet**, dass die Meldungen und der Identifikationscode aus einer Reihe von einzelnen Frequenzen entsprechend dem Tonfrequenzwahlverfahren zusammengesetzt sind, wobei die in diesem Verfahren für die Meldungen und/oder für die Identifikationscode verwendeten Frequenzwerte von denjenigen des normierten Tonfrequenzwahlverfahrens abweichen.

11. Verfahren nach einem oder mehreren der Ansprüche 1 bis 9, **dadurch gekennzeichnet**, dass die Meldungen und der Identifikationscode aus einer Reihe von einzelnen Frequenzen entsprechend dem Tonfrequenzwahlverfahren zusammengesetzt sind, wobei die in diesem Verfahren für die Meldungen und/oder für die Identifikationscode verwendeten Frequenzwerte den im normierten Tonfrequenzwahlverfahren verwendeten Frequenzwerten entsprechen.

12. Verfahren nach einem oder mehreren der vorangehenden Ansprüche, **dadurch gekennzeichnet**, dass bei mehreren Testeinheiten (TE2, ..., TEi) deren Konfiguration femgesteuert über das Vermittlungsnetz (SN) durch eine übergeordnete Testeinheit (TE1) vorgenommen wird.

13. Anwendung des Verfahrens nach einem oder mehreren der vorangehenden Ansprüche zur sequentiellen und/oder parallelen Überprüfung von Verbindungen zu mehreren Antworteinheiten (AE1, ..., AEn), wobei zumindest eine der Testeinheiten (TE1, ..., TEi) die zu prüfenden Antworteinheiten (AE1,..., AEn) bzw. die zu diesen führenden Verbindungen in einer Liste vorgegeben werden.

## Claims

1. Method for checking switching and transmission procedures in a switching network (SN) to which at least two terminals (TE1, ..., TEi; AE1, ..., AEn) are connected, of which terminals (TE1, ..., TEi; AE1, ..., AEn) at least one is a test unit (TE1, ..., TEi) which controls the essential method steps and at least one further terminal (TE1, ..., TEi; AE1, ..., AEn) is an answer unit (AE1, ..., AEn), the method consisting in that in a first method step, a connection is set up from a test unit (TE1, ..., TEi) to an answer unit (AE1, ..., AEn), in that in a second method step, an identification code which is characteristic of the answer unit (AE1, ..., AEn) is transmitted by the answer unit (AE1, ..., AEn) to the test unit (TE1, ..., TEi), and in that in a third method step, the identification code which was transmitted is compared with an identification code which is expected by the test unit (TE1, ..., TEi), **characterised in that** the answer units (AE1, ..., AEn) are automatic answerers for recording and playing back data transmitted over voice channels with or without password protection, and in that the characteristic identification code is recorded in the answer unit (AE1, ..., AEn) as a playout text, which is played back in the second method step.

2. Method according to claim 1, characterised in that in a fourth method step, a password is sent by the test unit (TE1, ..., TEi) to the answer unit (AE1, ..., AEn), by which password the answer unit (AE1, ..., AEn) is put into a message-recording mode which is indicated to the test unit (TE1, ..., TEi), whereupon the connection is broken.

3. Method according to claim 1, characterised in that in a fourth method step, a password is sent by the test unit (TE1, ..., TEi) to the answer unit (AE1, ..., AEn), by which password the answer unit (AE1, ..., AEn) is put into a message-recording mode which is indicated to the test unit (TE1, ..., TEi), whereupon the latter sends a message to the answer unit (AE1, ..., AEn), which is recorded in the answer unit (AE1, ..., AEn).

4. Method according to claim 1, characterised in that in a fourth method step, the test unit (TE1, ..., TEi) sends a message to the answer unit (AE1, ..., AEn) which is recorded in the answer unit (AE1, ..., AEn) as a first message.

5. Method according to claim 1, 3 or 4, characterised in that in a final method step, the connection between test unit (TE1, ..., TEi) and answer unit (AE1, ..., AEn) is broken.

6. Method according to claim 5 in connection with one of claims 3 or 4, characterised in that after the connection between the test unit (TE1, ..., TEi) and the answer unit (AE1, ..., AEn) has been broken and after a waiting time has elapsed, the same connection is set up again, with the checking of the identification code in accordance with the second and third method steps being carried out again or being omitted, and in that the message stored in the answer unit (AE1, ..., AEn) is then played back and transmitted to the test unit (TE1, ..., TEi), in which the message which is received is compared with the message which was originally sent, and after the transmission of the message has been completed, the connection is broken.

7. Method according to one or more of the preceding claims, characterised in that a connection which has been set up between the test unit (TE1, .... TEi) and the answer unit (AE1, ..., AEn) is left for a certain time, during which the test unit (TE1, .... TEi) records the charges calculated by the switching network (SN) for the connection, in that in the test unit (TE1, ..., TEi), the charges are additionally calculated on the basis of tables of values stored in the test unit (TE1, ..., TEi), and in that the charges to be calculated by the switching network (SN) and the charges calculated by the test unit (TE1, ..., TEi) are compared with each other.

8. Method according to one or more of the preceding claims, characterised in that the individual method steps and the results thereof are recorded and/or analysed in the test unit (TE1, ..., TEi).

9. Method according to one or more of the preceding claims, characterised in that at least one answer unit (AE1, ... AEn) is initialised by the test unit (TE1, ..., TEi).

10. Method according to one or more of the preceding claims, characterised in that the messages and the identification code are made up of a series of individual frequencies corresponding to the audio frequency selection method, with the frequency values used in this method for the messages and/or for the identification code differing from those of the standard audio frequency selection method.

11. Method according to one or more of claims 1 to 9, characterised in that the messages and the identification code are made up of a series of individual frequencies corresponding to the audio frequency selection method, with the frequency values used in this method for the messages and/or for the identification code corresponding to the frequency values used in the standard audio frequency selection method.

12. Method according to one or more of the preceding claims, characterised in that in the case of a plurality of test units (TE2, ..., TEi), the configuration thereof is carried out by remote control via the switching network (SN) by a master test unit (TE1).

13. Use of the method according to one or more of the preceding claims for sequential and/or parallel checking of connections to a plurality of answer units (AE1, ..., AEn), with at least one of the test units (TE1, ..., TEi) specifying in a list the answer units (AE1, ..., AEn) to be tested or the connections leading thereto.

## Revendications

1. Procédé de test d'opérations de commutation et de transmission dans un réseau commuté (SN), auquel au moins deux terminaux (TE1 à TEi ; AE1 à AEn) sont raccordés, parmi lesquels au moins l'un des terminaux (TE1 à TEi ; AE1 à AEn) est une unité de test (TE1 à TEi) commandant les étapes essentielles du procédé et au moins un autre terminal (TE1 à TEi ; AE1 à AEn) est une unité de réponse (AE1, à AEn), le procédé consistant en ce que lors d'une première étape, on établit une liaison d'une unité de test (TE1 à TEi) à une unité de réponse (AE1, à AEn), lors d'une deuxième étape, l'unité de réponse (AE1, à AEn) transmet à l'unité de test (TE1 à TEi) un code d'identification caractéristique de l'unité de réponse (AE1, à AEn), lors d'une troisième étape, on compare le code d'identification transmis à un code d'identification attendu par l'unité de test (TE1 à TEi), caractérisé par le fait que les unités de réponse (AE1, à AEn) sont des répondeurs automatiques pour l'enregistrement et la reproduction de données transmises via des canaux vocaux avec ou sans mot de passe et on enregistre le code d'identification caractéristique dans l'unité de réponse (AE1, à AEn) comme texte d'annonce qui est reproduit lors de la deuxième étape.

2. Procédé selon la revendication 1, caractérisé par le fait que, lors d'une quatrième étape, l'unité de test (TE1 à TEi) envoie à l'unité de réponse (AE1, à AEn) un mot de passe par lequel l'unité de réponse (AE1 à AEn) est placée dans un mode d'enregistrement de message signalé à l'unité de test (TE1 à TEi), à la suite de quoi on libère la liaison.

3. Procédé selon la revendication 1, caractérisé par le fait que, lors d'une quatrième étape, l'unité de test (TE1 à TEi) envoie à l'unité de réponse (AE1, à AEn) un mot de passe par lequel l'unité de réponse (AE1, à AEn) est placée dans un mode d'enregistrement de message signalé à l'unité de test (TE1 à TEi), à la suite de quoi cette unité de test envoie à l'unité de réponse (AE1, à AEn) un message qui est enregistré dans l'unité de réponse (AE1, à AEn).

4. Procédé selon la revendication 1, caractérisé par le fait que, lors d'une quatrième étape, l'unité de test (TE1 à TEi) envoie à l'unité de réponse (AE1 à AEn) un message qui est enregistré comme premier message dans l'unité de réponse (AE1, à AEn).

5. Procédé selon la revendication 1, 3 ou 4, caractérisé par le fait que, lors d'une dernière étape, on libère la liaison entre l'unité de test (TE1 à TEi) et l'unité de réponse (AE1, à AEn).

6. Procédé selon la revendication 5 en relation avec l'une des revendications 3 ou 4, caractérisé par le fait que, après la libération de la liaison entre l'unité de test (TE1 à TEi) et l'unité de réponse (AE1, à AEn) et après l'écoulement d'un temps d'attente, on établit de nouveau la même liaison, le test du code d'identification comme aux deuxième et troisième étapes du procédé étant effectué encore une fois ou étant laissé de côté, et ensuite, on reproduit le message mémorisé dans l'unité de réponse (AE1, à AEn) et on le transmet à l'unité de test (TE1 à TEi) dans laquelle on compare le message reçu au message initialement envoyé et, après la fin de la transmission du message, on libère la liaison.

7. Procédé selon une ou plusieurs des revendications précédentes, caractérisé par le fait qu'on laisse une liaison établie entre l'unité de test (TE1 à TEi) et l'unité de réponse (AE1, à AEn) pendant un certain temps pendant lequel l'unité de test (TE1 à TEi) enregistre les taxes calculées par le réseau commuté (SN) pour la liaison, on calcule aussi dans l'unité de test (TE1 à TEi) les taxes sur la base de tableaux de valeurs mémorisés dans l'unité de test (TE1 à TEi) et on compare les taxes calculées par le réseau commuté (SN) et les taxes calculées par l'unité de test (TE1 à TEi).

8. Procédé selon une ou plusieurs des revendications précédentes, caractérisé par le fait qu'on enregistre et/ou analyse les différentes étapes et leurs résultats dans l'unité de test (TE1 à TEi).

9. Procédé selon une ou plusieurs des revendications précédentes, caractérisé par le fait qu'on initialise au moins une unité de réponse (AE1, à AEn) au moyen de l'unité de test (TE1 à TEi).

10. Procédé selon une ou plusieurs des revendications précédentes, caractérisé par le fait qu'on compose les messages et le code d'identification à partir d'une série de fréquences individuelles selon le procédé de numérotation à fréquences vocales, les valeurs fréquentielles utilisées dans ce procédé pour les messages et/ou pour le code d'identification étant différentes de celles du procédé de numérotation à fréquences vocales normalisé.

11. Procédé selon une ou plusieurs des revendications 1 à 9, caractérisé par le fait qu'on compose les messages et le code d'identification à partir d'une série de fréquences individuelles selon le procédé de numérotation à fréquences vocales, les valeurs fréquentielles utilisées dans ce procédé pour les messages et/ou pour le code d'identification correspondant aux valeurs fréquentielles utilisées dans le procédé de numérotation à fréquences vocales modifié.

12. Procédé selon une ou plusieurs des revendications précédentes, caractérisé par le fait que, dans le cas de plusieurs unités de test (TE2 à TEi), on met en oeuvre leur configuration par une commande à distance par l'intermédiaire du réseau commuté (SN) au moyen d'une unité de test (TE1) de rang supérieur.

13. Utilisation du procédé selon une ou plusieurs des revendications précédentes pour le test séquentiel et/ou parallèle de liaisons vers plusieurs unités de réponse (AE1, à AEn), dans lequel on prescrit dans une liste à au moins l'une des unités de test (TE1 à TEi) les unités de réponse (AE1, à AEn) à tester, c'est-à-dire les liaisons allant vers ces unités de réponse.
